Europäisches Patentamt

European Patent Office

Office européen des brevets

(11) Veröffentlichungsnummer: **0 195 909**
**B1**

(12) **EUROPÄISCHE PATENTSCHRIFT**

(45) Veröffentlichungstag der Patentschrift: **09.01.91**

(51) Int. Cl.⁵: **C 08 F 279/02, C 08 F 2/38, C 08 F 8/34, C 08 F 291/02**

(21) Anmeldenummer: **86101654.1**

(22) Anmeldetag: **10.02.86**

(54) Schwefelhaltige Pfropfprodukte.

(30) Priorität: **20.02.85 DE 3505778**

(43) Veröffentlichungstag der Anmeldung:
**01.10.86 Patentblatt 86/40**

(45) Bekanntmachung des Hinweises auf die Patenterteilung:
**09.01.91 Patentblatt 91/02**

(84) Benannte Vertragsstaaten:
**BE DE FR GB IT NL**

(56) Entgegenhaltungen:
**EP-A-0 084 882**
**FR-A-2 145 498**
**GB-A- 867 822**
**GB-A-1 199 672**
**US-A-2 888 442**

(73) Patentinhaber: **BAYER AG**
**D-5090 Leverkusen 1 Bayerwerk (DE)**

(72) Erfinder: **Eichenauer, Herbert, Dr.**
**Goethestr. 71**
**D-4047 Dormagen 1 (DE)**
Erfinder: **Pischtschan, Alfred, Dr.**
**Zur Eiche 33**
**D-5067 Kürten (DE)**
Erfinder: **Ott, Karl-Heinz, Dr.**
**Paul Klee-Str. 54**
**D-5090 Leverkusen 1 (DE)**

**Beschreibung**

Gegenstand der vorliegenden Erfindung sind schwefelhaltige elastisch-thermoplastische Pfropfprodukte mit terminalen Thioalkylgruppen, die einen Schwefelgehalt von 1,15 bis 3,95 Gew.-% besitzen und deren Thermoplastanteil der auf den Kautschuk polymerisierten Monomeren eine Grenzviskosität von 2 bis 15 ml/g (gemessen in DMF bei 25°C) aufweist.

ABS-Polymerisate besitzen eine gute Eigenschaftskombination aus hoher Kerbschlagzähigkeit, guter Chemikalienbeständigkeit und leichter Verarbeitbarkeit. Trotzdem kann es in speziellen Fällen, so z.B. bei ABS-Abmischungen mit hohem Kautschukgehalt zu einer für die Praxisanforderungen moderner Verarbeitungstechnologie nicht ausreichenden Fließfähigkeit des thermoplastischen Materials kommen. Abhilfe durch Zugabe niedermolekularer Fließhilfsmittel wie z.B. Ethylendiaminbisstearoylamid oder Calciumstearat führt oft zu Zähigkeitsverlusten, verminderter Wärmeformbeständigkeit oder zu einer Auswanderung des zugesetzten Gleitmittels.

Eine Verbesserung der Fließfähigkeit durch Erhöhung der Verarbeitungstemperatur läßt sich meist nur mit einem teilweisen thermooxidativen Abbau der Kautschukphase erkaufen.

Es bestand daher ein Bedarf an einem thermoplastischen Material, das zur Verbesserung der Fließfähigkeit von ABS-Thermoplastharzen eingesetzt werden kann, welches keine negativen Auswirkungen auf die ABS-Eigenschaften, insbesondere Zähigkeit und Wärmeformbeständigkeit, ausübt, und das einer thermooxidativen Zersetzung der Kautschukphase entgegenwirkt.

Gegenstand der Erfindung sind schwefelhaltige elastischthermoplastische Pfropfprodukte von Styrol, α-Methylstyrol, p-Methylstyrol, Vinyltoluol, Acrylnitril oder Methylmethacrylat oder Mischungen daraus auf einen teilchenförmigen Kautschuk mit einem mittleren Teilchendurchmesser ($d_{50}$) von 0,05 bis 20,0 μm, vorzugsweise 0,1 bis 1,0 μm und einer Glastemperatur ≦10°C mit einem Gesamtkautschukgehalt von 1 bis 80 Gew.-%, vorzugsweise von 10 bis 60 Gew.-%, wobei die Pfropfprodukte einen Schwefelgehalt von 1,15 bis 3,95 Gew.-%, vorzugsweise von 1,25 bis 2,40 Gew.-% besitzen, deren Thermoplastanteil der auf den teilchenförmigen Kautschuk polymerisierten Monomeren eine Grenzviskosität von 2 bis 15 ml/g, vorzugsweise von 3 bis 12 ml/g (gemessen in DMF bei 25°C) aufweist und bei denen mindestens 90 Gew.-% des eingebauten Schwefels als Bestandteil terminaler $C_{1-18}$-Thioalkylgruppen vorliegt.

Bevorzugte schwefelhaltige Pfropfprodukte sind solche, die mit ABS-Polymerisaten eine gute Verträglichkeit besitzen, insbesondere Produkte, die durch Co- oder Terpolymerisation von (kern- oder seitenkettensubstituierten) Styrol-haltigen Monomergemischen in Gegenwart eines Polybutadiens erhalten werden.

Die Herstellung der erfindungsgemäßen Polymerisate kann durch Lösungs- Suspensions- oder Emulsionspolymerisation oder durch Kombination dieser Verfahren in an sich bekannter Weise erfolgen, bevorzugt ist die Polymerisation in Emulsion.

Diese wird vorzugsweise unter Verwendung anionischer Emulgatoren wie z.B. Natrium-, Kalium- oder Ammoniumsalze langkettiger Fettsäuren mit 10 bis 20 C-Atomen, z.B. Kaliumoleat, Alkylsulfate mit 10 bis 20 C-Atomen, Alkylarylsulfonate mit 10 bis 20 C-Atomen oder Alkali- bzw. Ammoniumsalze der disproportionierten Abietinsäure durchgeführt.

Die Pfropfreaktion kann in einem weiten Temperaturbereich durchgeführt werden, vorzugsweise erfolgt sie zwischen 30°C und 100°C, besonders bevorzugt zwischen 50° und 80°C.

Geeignete radikalbildende Initiatoren sind organische und anorganische Peroxide, anorganische Persulfate wie z.B. Kaliumpersulfat, Azoinitiatoren wie z.B. Azobisisobutyronitril, sowie Redox-Systeme, die aus einem Oxidationsmittel, vorzugsweise einem Peroxid, und einem Reduktionsmittel bestehen.

Als bevorzugter Initiator wird Kaliumpersulfat eingesetzt, die Einsatzmengen betragen zwischen 0,1 und 0,5 Gew.-%.

Als Kautschukgrundlagen werden in Emulsionform vorliegende teilchenförmige Kautschuke mit einem mittleren Teilchendurchmesser ($d_{50}$) von 0,05 bis 20,0 μm, vorzugsweise 0,1 bis 1,0 μm, und einer Glastemperatur ≦10°C verwendet. Beispiele für einsetzbare Kautschuke sind Polybutadien, Polyisopren, Styrol-Butadien-Copolymerisate, Acrylnitril-Butadien-Copolymerisate, Acrylatkautschuke, EPM-Kautschuke (Ethylen/Propylen-Kautschuke) und EPDM-Kautschuke (Ethylen/Propylen/Dien-Kautschuke, die als Dien ein nichtkonjugiertes Dien wie z.B. Hexadien-1,5 oder Norbornadien in kleinen Mengen enthalten). Die mittleren Teilchendurchmesser werden mittels Ultrazentrifuge (vergl. W. Scholtan, H. Lange: Kolloid-Z. u. Z. Polymere *250*, S 782—796 (1972)) bestimmt.

Die Einführung der terminalen Thioalkylgruppen erfolgt durch Pfropfreaktion eines Gemisches aus Monomeren und $C_{1-18}$-Alkylmercaptan in Gegenwart der Pfropfkautschukgrundlage, wobei das als Kettenüberträger wirkende Mercaptan als endständige Thioalkylgruppe eingebaut wird.

Dabei muß der durch die endständigen Thioalkylgruppen eingebrachte Schwefelgehalt mindestens 90 Gew.-% des im Polymerisat insgesamt vorhandenen Schwefels betragen. Der Gehalt an eventuelle sonst noch im Polymeren vorhandenem Schwefel, beispielsweise durch Einbau von Initiatorbruchstücken oder durch Pfropfreaktion von schwefelhaltigen Emulgatoren eingebracht, beträgt weniger als 10 Gew.-% des Gesamtschwefelgehalts im Polymerisat.

Beispiele für einsetzbare $C_{1-18}$-Alkylmercaptane sind Ethylmercaptan, n-Propylmercaptan, n-Butylmercaptan, tert.-Butylmercaptan, n-Pentylmercaptan, n-Hexylmercaptan, n-Octylmercaptan, n-Decylmercaptan, n-Dodecylmercaptan, tert.-Dodecylmercaptan, n-Hexadecylmercaptan und n-Octadecylmercaptan.

Bevorzugte Alkylmercaptane sind tert.-Dodecylmercaptan und n-Dodecylmercaptan bzw. deren Gemische.

Die Propfprodukte besitzen einen Kautschukgehalt von 1 bis 80 Gew.-%, insbesondere 10 bis 60 Gew.-%, die Gelgehalte, gemessen in Aceton bei 25°C, betragen 5 bis 95 Gew.-%, insbesondere 20 bis 80 Gew.-%.

Die Grenzviskosität des Thermoplastanteils der auf den teichenförmigen Kautschuk polymerisierten Monomeren ist gemäß den Untersuchungen von Dinges et. al., (Makromol. Chemie *101*, S. 200—213 (1967)) identisch mit der Grenzviskosität des bei der Pfropfreaktion "nebenher" entstehenden, nicht chemisch gebundenen Polymermaterials, so daß die Bestimmung der Grenzviskosität einfacher an diesem löslichen Material vorgenommen werden kann.

Die erfindungsgemäßen schwefelhaltigen Pfropfprodukte, deren Thermoplastanteil der auf den teilchenförmigen Kautschuk polymerisierten Monomeren eine Grenzviskosität von 2 bis 15 ml/g (gemessen in DMF bei 25°C) aufweist, eignen sich als Mittel zur Verbesserung der Fließfähigkeit von ABS-Polymerisaten bei der thermoplastischen Verarbeitung. Dabei werden sie den ABS-Polymerisaten in Mengen von 0,5 bis 15 Gew.-%, vorzugsweise von 1 bis 10 Gew.-% und besonders bevorzugt von 1,5 bis 7,5 Gew.-% zugesetzt. Aufgrund ihres Gehaltes an endständigen Thioalkylgruppen zeigen sie zum einen eine gute Wirksamkeit als Sauerstoffänger, wobei die Thioethergruppierung in Sulfoxid- oder Sulfongruppierungen überführt wird, zum anderen trägt die Alkylgruppe, insbesondere eine längerkettige Gruppierung wie z.B. der Dodecylrest, zu einer erhöhten Wirksamkeit als Fließfähigkeitsverbesserer bei.

Ebenfalls Gegenstand der Erfindung sind thermoplastische Mischungen enthaltend Pfropfpolymerisate A), Copolymerisate B) und Pfropfprodukte C), dadurch gekennzeichnet, daß sie ein schwefelhaltiges, elastisch-thermoplastisches Pfropfprodukt c) aus Styrol, α-Methylstyrol, p-Methylstyrol, Vinyltoluol, Acrynitril oder Methylmethacrylat oder Mischungen daraus auf einen teilchenförmigen Kautschuk mit einem mittleren Durchmesser ($d_{50}$) von 0,05 bis 20,0 µm und einer Glastemperatur ≤10°C mit einem Gesamtkautschukgehalt von 1 bis 80 Gew.-%, mit einem über terminale $C_{1-18}$-Thioalkylgruppen eingebrachten Schwefelgehalt von 1,15 bis 3,95 Gew.-% und einer Grenzviskosität des auf den teilchenförmigen Kautschuk polymerisierten Thermoplastanteils von 2 bis 15 ml/g (gemessen in Dimethylformamid bei 25°C) in Mengen von 0,5 bis 15 Gew.-Teilen, bezogen jeweils auf 100 Gew.-Teile Mischung aus Pfropfpolymerisate A), Copolymerisate B) und Pfropfprodukte C), enthalten.

Besondere thermoplastische Mischungen sind dadurch gekennzeichnet, daß das Pfropfprodukt C) durch Polymerisation eines Gemisches aus

a) 50 bis 80 Gew.-Teilen, vorzugsweise 55 bis 75 Gew.-Teilen (α-Methyl)Styrol und/oder p-Methylstyrol bzw. Vinyltoluol,

b) 10 bis 30 Gew.-Teilen vorzugsweise 15 bis 27,5 Gew.-Teilen (Meth)Acrylnitril und

c) 7,5 bis 25 Gew.-Teilen, vorzugsweise 8 bis 15 Gew.-Teilen tert.-Dodecylmercaptan und/oder n-Dodecylmercaptan bzw. deren Gemische auf

d) 10 bis 200 Gew.-Teile Polybutadien hergestellt worden ist.

Besonders bevorzugt sind thermoplastische Mischungen aus

A) 5 bis 80 Gew.-Teile eines Pfropfpolymerisates aus

A)1) 5 bis 90 Gew.-Teilen einer Mischung aus

A)1)1) 50 bis 90 Gew.-% Styrol, α-Methylstyrol, kernsubstituiertem Styrol, Methylmethyacrylat oder Mischungen daraus und

A)1)2) 50 bis 10 Gew.-% (Meth)Acrylnitril, Methylmethacrylat, N-substituiertem Maleinimid oder Mischungen daraus, auf

A)2) 95 bis 10 Gew.-Teile eines Kautschuks mit einer Glastemperatur ≤10°C, und

B) 5 bis 95 Gew.-Teilen eines thermoplastischen Copolymerisats mit einem $\bar{M}_w$ von 15 000 bis 200 000 (gemessen durch Lichtstreung oder Sedimentation) aus

B)1) 50 bis 95 Gew.-% Styrol, α-Methylstyrol, kernsubstituiertem Styrol, Methylmethacrylat oder Mischungen daraus, und

B)2) 50 bis 5 Gew.-% (Meth)Acrylnitril, Methylmethacrylat, Maleinsäureanhydrid, N-substituiertem Maleinimid oder Mischungen daraus, wobei die Summe der Gew.-Teile aus Pfropfpolymerisat A), Copolymerisat B) und Pfropfprodukt C) jeweils wieder 100 beträgt.

Beispiele

In den nachfolgenden Beispielen wird die Erfindung näher erläutert. Die angegebenen Teile sind Gewichtsteile und beziehen sich immer auf Festbestandteile bzw. polymerisierbare Bestandteile.

Beispiel 1

50 Teile Polybutadien (in Form eines Latex mit einem Feststoffgehalt von 25 Gew.-%) mit einer mittleren Teilchengröße von 0,4 µm werden unter Stickstoff auf 65°C erwärmt, wonach 0,5 Teile Kaliumpersulfat (gelöst in 20 Teilen Wasser) zugegeben werden. Anschließend werden ein Gemisch aus 25,2 Teilen Styrol, 9,8 Teilen Acrylnitril und 15 Teilen tert.-Dodecylmercaptan sowie 2 Teile des Natriumsalzes der disproportionierten Abietinsäure (gelöst in 25 Teilen Wasser) innerhalb 4 Stunden zudosiert, wobei die Pfropfreaktion erfolgt. Nach einer Nachreaktionszeit wird der Latex in einer kalten Magnesiumsulfat/Essigsäure-Lösung koaguliert. Das nach Trocknung bei 70°C im Vakuum in einer Ausbeute von 96% erhaltene Polymerisat besitzt einen Schwefelgehalt von 2,25%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Grenzviskosität von 5,4 ml/g (gemessen in DMF bei 25°C).

**Beispiel 2**

20 Teile Polybutadien (in Form eines Latex mit einem Feststoffgehalt von 11,5 Gew.-%) mit einer mittleren Teilchengröße von 0,4 μm werden unter Stickstoff auf 65°C erwärmt, wonach 0,5 Teile Kaliumpersulfat (gelöst in 20 Teilen Wasser) zugegeben werden. Anschließend werden ein Gemisch aus 46,8 Teilen Styrol, 18,2 Teilen Acrylnitril und 15 Teilen tert.-Dodecylmercaptan sowie 2 Teile des Natriumsalzes der disproportionierten Abietinsäure (gelöst in 25 Teilen Wasser) innerhalb 4 Stunden zudosiert, wobei die Pfropfreaktion erfolgt. Nach einer Nachreaktionszeit wird der Latex in einer kalten Magnesiumsulfat/Essigsäure-Lösung koaguliert. Das nach Trocknung bei 70°C im Vakuum in einer Ausbeute von 97% erhaltene Polymerisat besitzt einen Schwefelgehalt von 2,3%.

Anschließend wird das Polymerisat in einer Soxhlet-Apparatur mit Methylethylketon 24 Stunden lang extrahiert. Die Lösung wird eingeengt, wonach das Lösungsmittel im Vakuum vollständig entfernt wird. Das zurückbleibende Polymerisat besitzt eine Grenzviskosität von 6,1 ml/g (gemessen in DMF bei 25°C).

**Beispiel 3**

Ein ABS-Polymerisat, bestehend aus 40 Gew.-Teilen eines Pfropfpolymerisats von 36 Gew.-Teilen Styrol und 14 Gew.-Teilen Acrylnitril auf 50 Gew.-Teile eines Polybutadiens mit einem mittleren Teilchendurchmesser ($d_{50}$) von 0,3 μm und 60 Gew.-Teilen eines Styrol-Acrylnitril-Copolymerisats aus 72 Gew.-Teilen Styrol und 28 Gew.-Teilen Acrylnitril mit einem $M_w$-Wert von ca. 80 000 ($M_w/M_n^{-1} \leq 2,0$) wurde mit 5 Gew.-Teilen des Polymerisats aus Beispiel 1 versetzt und bei 240°C durch Spritzgießen zu einer Spirale von ca. 8 mm Breite und ca. 2 mm Stärke verarbeitet. Die Spirallänge betrug 52 cm.

DSC-Messungen an dem pulverförmigen ABS-Polymerisat unter Verwendung eines DSC 2-Meßgerätes der Firma Perkin-Elmer ergaben bei der isothermen Messung bei 160°C (Spülgas Sauerstoff 3,6 l/h) eine Induktionszeit bis zur maximalen Oxidationsrate von 70,5 min. Bei der dynamischen Messung (Spülgas Sauerstoff 3,6 l/h, Heizrate 20 K/min) lag das Maximum der exothermen Reaktion bei T=217°C.

**Beispiel 4 (Vergleich)**

Das in Beispiel 3 beschriebene ABS-Polymerisat wurde ohne Zusatz des Polymerisats aus Beispiel 1 unter den gleichen Bedingungen verarbeitet. Die Spirallänge betrug 47 cm.

DSC-Messungen unter gleichen Bedingungen ergaben für die isotherme Messung bei 160°C eine Induktionszeit bis zur maximalen Oxidationsrate von 3,8 Minuten. Bei der dynamischen Messung lag das Maximum der exothermen Reaktion bei T=190,5°C.

**Patentansprüche**

1. Thermoplastische Mischungen enthaltend Pfropfpolymerisate A), Copolymerisate B) und Pfropfprodukte C), dadurch gekennzeichnet, daß sie ein schwefelhaltiges elastisch-thermoplastisches Pfropfprodukt C) aus Styrol, α-Methylstyrol, p-Methylstyrol, Vinyltoluol, Acrylnitril oder Methylmethacrylat oder Mischungen daraus auf einen teilchenförmigen Kautschuk mit einem mittleren Teilchendurchmesser ($d_{50}$) von 0,05 bis 20,0 μm und einer Glastemperatur ≤10°C mit einem Gesamtkautschukgehalt von 1 bis 80 Gew.-%, mit einem über terminale $C_{1-18}$-Thioalkylgruppen eingebrachten Schwefelgehalt von 1,15 bis 3,95 Gew.-% und einer Grenzviskosität des auf den teilchenförmigen Kautschuk polymerisierten Thermoplastanteils von 2 bis 15 ml/g (gemessen in Dimethylformamid bei 25°C) in Mengen von 0,5 bis 15 Gew.-Teilen, bezogen jeweils auf 100 Gew.-Teile Mischung aus Pfropfpolymerisate A), Copolymerisate B) und Pfropfprodukte C), enthalten.

2. Thermoplastische Mischungen gemäß Anspruch 12, dadurch gekennzeichnet, daß das Pfropfprodukt C) durch Polymerisation eines Gemisches aus

a) 50 bis 80 Gew.-Teilen, vorzugsweise 55 bis 75 Gew.-Teilen (α-Methyl)Styrol und/oder p-Methylstyrol bzw. Vinyltoluol,

b) 10 bis 30 Gew.-Teilen, vorzugsweise 15 bis 27,5 Gew.-Teilen (Meth)Acrylnitril und

c) 7,5 bis 25 Gew.-Teilen, vorzugsweise 8 bis 15 Gew.-Teilen tert.-Dodecylmercaptan und/oder n-Dodecylmercaptan bzw. deren Gemische auf

d) 10 bis 200 Gew.-Teile Polybutadien hergestellt worden ist.

3. Thermoplastische Mischungen gemäß den Ansprüchen 12 und 13, dadurch gekennzeichnet, daß sie

A) 5 bis 80 Gew.-Teile eines Pfropfpolymerisates aus

A)1) 5 bis 90 Gew.-Teilen einer Mischung aus

A)1)1) 50 bis 90 Gew.-% Styrol, α-Methylstyrol, kernsubstituiertem Styrol, Methylmethacrylat oder Mischungen daraus und

A)1)2) 50 bis 10 Gew.-% (Meth)Acrylnitril, Methylmethacrylat, N-substituiertem Maleinimid oder Mischungen daraus, auf

A)2) 95 bis 10 Gew.-Teile eines Kautschuks mit einer Glastemperatur ≤10°C, und

B) 5 bis 95 Gew.-Teilen eines thermoplastischen Copolymerisats mit einem $\overline{M}_w$ von 15 000 bis 200 000 (gemessen durch Lichtstreuung oder Sedimentation) aus

B)1) 50 bis 95 Gew.-% Styrol, α-Methylstyrol, kernsubstituiertem Styrol, Methylmethacrylat oder Mischungen daraus, und

B)2) 50 bis 5 Gew.-% (Meth)Acrylnitril, Methylmethacrylat, Maleinsäureanhydrid, N-substituiertem Maleinimid oder Mischungen daraus, enthalten, wobei die Summe der Gew.-Teile aus Pfropfpolymerisat A), Copolymerisat B) und Pfropfprodukt C) jeweils wieder 100 beträgt.

**Revendications**

1. Mélanges thermoplastiques contenant des polymères greffés A), des copolymères (B) et des produits greffés (C), caractérisées en ce qu'ils contiennent un produit greffé C) élastico-thermoplastique contenant du soufre, constitué de styrène, d'α-méthylstyrène, de p-méthylstyrène, de vinyltoluène, d'acrylonitrile ou de méthacrylate de méthyle ou encore de mélanges de ces derniers, sur un caoutchouc particulaire ayant un diamètre moyen de particule ($d_{50}$) allant de 0,05 à 20,0 μm et une température de transition vitreuse ≤10°C, ayant une teneur globale en caoutchouc de 1 à 80% en poids et une teneur en soufre de 1,15 à 3,95% en poids, incorporée par l'intermédiaire de groupes thioalkyle en $C_1$—$C_{18}$ terminaux, ainsi qu'une viscosité limite de la fraction thermoplastique polymérisée sur le caoutchouc particulaire, allant de 2 à 15 ml/g (mesurée dans du DMF à 25°C), dans des quantités de 0,5 à 15 parties en poids, rapporté chaque fois sur 100 parties en poids du mélange constitué par les polymères greffés A), les copolymères B) et les produits greffés C).

2. Mélanges thermoplastiques selon la revendication 1, caractérisés en ce qu'on prépare le produit greffé C) par polymérisation d'un mélange constitué par:

a) 50 à 80 parties en poids, de préférence, 55 à 75 parties en poids d'(α-méthyl)styrène et/ou de p-méthylstyrène ou bien de vinyltoluène;

b) 10 à 30 parties en poids, de préférence, 15 à 27,5 parties en poids de (méth)acrylonitrile; et

c) 7,5 à 25 parties en poids, de préférence, 8 à 15 parties en poids de tert.-dodécylmercaptan et/ou de n-dodécylmercaptan ou encore de leurs mélanges, sur

d) 10 à 200 parties en poids de polybutadiène.

3. Mélanges thermoplastiques selon les revendications 1 et 2, caractérisés en ce qu'ils contiennent:

A) 5 à 80 parties en poids d'un polymère greffé constitué par

A)1) 5 à 90 parties en poids d'un mélange constitué par

A)1)1) 50 à 90% en poids de styrène, d'α-méthylstyrène, de styrène substitué sur le noyau, de méthacrylate de méthyle ou de mélanges de ces derniers et

A)1)2) 50 à 10% en poids de (méth)acrylonitrile, de méthacrylate de méthyle, de maléimide N-substitué ou de mélanges de ces derniers, sur

A)2) 95 à 10 parties en poids d'un caoutchouc ayant une température de transition vitreuse ≤10°C, et

B) 5 à 95 parties en poids d'un copolymère thermoplastique ayant un poids moléculaire de 15 000 à 200 000 (mesuré par diffusion de la lumière ou par sédimentation), constitué par

B)1) 50 à 95% en poids de styrène, d'α-méthylstyrène, de styrène substitué sur le noyau, de méthacrylate de méthyle ou de mélanges de ces derniers; et

B)2) 50 à 5% en poids de (méth)acrylonitrile, de méthacrylate de méthyle, d'anhydride maléique, de maléimide N-substitué ou de mélanges de ces derniers, la somme des parties en poids comprenant le polymère greffé A), le copolymère B) et le produit greffé C), s'élevant chaque fois à nouveau à 100.

**Claims**

1. Thermoplastic mixtures containing graft polymers A), copolymers B) and graft products C), characterized in that they contain a sulfur-containing elastic-thermoplastic graft product C) of styrene, α-methyl styrene, p-methyl styrene, vinyl tolunee, acrylonitrile or methyl methacrylate or mixtures thereof on a particulate rubber having an average particle diameter ($d_{50}$) of 0.05 to 20.0 μm and a glass temperature of ≤10°C with a total rubber content of 1 to 80% by weight, a sulfur content introduced through terminal $C_{1-18}$ thioalkyl groups of 1.15 to 3.95% by weight and an intrinsic viscosity of the thermoplastic component polymerized onto the particulate rubber of 2 to 15 ml/g (as measured in dimethyl formamide at 25°C) in quantities of 0.5 to 15 parts by weight, based on 100 parts by weight of the mixture of graft polymers A), copolymers B) and graft products C).

2. Thermoplastic mixtures as claimed in claim 1, characterized in that the graft product C) is obtained by polymerization of a mixture of

a) 50 to 80 parts by weight and preferably 55 to 75 parts by weight (α-methyl)styrene and/or p-methyl styrene or vinyl toluene,

b) 10 to 30 parts by weight and preferably 15 to 27.5 parts by weight (meth)acrylonitrile and

c) 7.5 to 25 parts by weight and preferably 8 to 15 parts by weight tert. dodecyl mercaptan and/or n-dodecyl mercaptan or mixtures thereof onto

d) 10 to 200 parts by weight polybutadiene.

3. Thermoplastic mixtures as claimed in claims 1 and 2, characterized in that they contain

A) 5 to 80 parts by weight of a graft polymer of

A)1) 5 to 90 parts by weight of a mixture of

A)1)1) 50 to 90% by weight styrene, α-methyl styrene, nucleus-substituted styrene, methyl methacrylate or mixtures thereof and

A)1)2) 50 to 10% by weight (meth)acrylonitrile, methyl methacrylate, N-substituted maleic imide or mixtures thereof on

A)2) 95 to 10 parts by weight of a rubber having a glass temperature of ≤10°C and

B) 5 to 95 parts by weight of a thermoplastic copolymer having an $\overline{M}_w$ of 15,000 to 200,000 (as measured by light scattering or sedimentation) of

B)1) 50 to 95% by weight styrene, α-methyl styrene, nucleus-substituted styrene, methyl methacrylate or mixtures thereof and

B)2) 50 to 5% by weight (meth)acrylonitrile, methyl methacrylate, maleic anhydride, N-substituted maleic imide or mixtures thereof, the sum of the parts by weight of graft polymer A), copolymer B) and graft product C) again amounting to 100.